# EUROPÄISCHE PATENTANMELDUNG

(11) **EP 1 913 895 A2**
(43) Veröffentlichungstag der Anmeldung: **23.04.2008**
(21) Anmeldenummer: 07118600.1
(22) Anmeldetag: 16.10.2007
(51) Int. Cl.: A61C 8/00, A61C 13/38

(54) **Verfahren zur Herstellung eines Kopfteils eines Zahnimplantats sowie Fertigungssatz für ein solches Verfahren**

(30) Priorität: 20.10.2006 DE 102006050457
(71) Anmelder: DeguDent GmbH, 63457 Hanau (DE)
(72) Erfinder: Gampert, Peter, 83371 Stein a. d. Traun (DE)
(74) Vertreter: Stoffregen, Hans-Herbert

(57) **Zusammenfassung**

Die Erfindung betrifft ein Verfahren zur Herstellung eines Kopfteils eines Zahnimplantats aus einem individuell gefertigten Positivmodell (27), welches Kopfteil mit einer Steckverbindung mit einer Formschlusskontur als Verdrehsicherung auf einen, im Kieferknochen einsetzbaren Grundkörperteil steckbar ist, wobei ein Steckansatz an einem Teil und eine zugeordnete passgenaue Aufnahmeöffnung als Sackloch am anderen Teil angeordnet ist, in welchem Verfahren in einem Kopierfrässchritt die Außenfläche des Positivmodells (27) dreidimensional abgetastet und erfasst wird, auf welcher Grundlage ein Keramik-Rohling (29) zur Herstellung des Kopfteils gefräst wird. Erfindungsgemäß wird in einem vor dem Kopierfrässchritt erfolgenden Vorbearbeitungsschritt an dem noch unbearbeiteten Keramik-Rohling (29) die Steckverbindung mit der Formschlusskontur vorgefertigt, und an dem Positivmodell (27) in einer, mit der Lage der rohlingsseitigen Steckverbindung korrespondierenden Position ein Abtasteinsatz (41) vorgesehen, der die Dimension des Positivmodells (27) um zumindest ein Raummaß vergrößert, das von der Steckverbindung eingenommen wird.

## Beschreibung

Die Erfindung betrifft ein Verfahren zur Herstellung eines Kopfteils eines Zahnimplantats aus einem individuell gefertigten Positivmodell, welches Kopfteil mit einer Steckverbindung mit einer Formschlusskontur als Verdrehsicherung auf einen, im Kieferknochen einsetzbaren Grundkörperteil steckbar ist, wobei ein Steckansatz an einem Teil und eine zugeordnete passgenaue Aufnahmeöffnung als Sackloch am anderen Teil angeordnet ist, in welchem Verfahren in einem Kopierfrässchritt die Außenfläche des Positivmodells dreidimensional abgetastet und erfasst wird, auf welcher Grundlage ein Keramik-Rohling zur Herstellung des Kopfteils gefräst wird.

Auch nimmt die Erfindung Bezug auf einen Fertigungssatz für ein Verfahren zur Herstellung eines Kopfteils eines Zahnimplantats aus einem individuell gefertigten Positivmodell mittels eines Kopierfräsgeräts.

Zahnimplantate für einen Zahnersatz bestehen üblicherweise aus einem zylindrischen, in eine Bohrung im Kieferknochen einsetzbaren Grundkörperteil aus Metall, das eine zu dessen koronalem Ende offene, sich etwa in Längsrichtung des Grundkörpers erstreckende Aufnahmeöffnung als Sackloch aufweist. In der Aufnahmeöffnung ist eine Innen-Formschlusskontur einer Verdrehsicherung angeformt. Im weiteren Aufbau kann ein Kopfteil mit einem Steckansatz folgen, der eine der Verdrehsicherung zugeordnete Außen-Formschlusskontur aufweist und der in die Aufnahmeöffnung des Grundkörperteils formschlüssig sowie verdrehgesichert einsteckbar ist. Das Kopfteil kann aus Keramikmaterial, insbesondere Zirkonoxid, hergestellt sein und aus kosmetischen Gründen zumindest im Frontzahnbereich eine Zahnverblendung aus Keramik oder Kunststoff aufweisen.

Ein derart gebildetes Zahnimplantat ist aus der DE-A-10 2006 011 800 bekannt, in der im unteren Bereich des Kopfteils die Formschlusskontur einer Verdrehsicherung als Achtkantkontur ausgebildet ist. Für die Steckverbindung weist das Grundkörperteil an seinem koronalen Ende eine offene Aufnahmeöffnung auf, die als Negativform für eine formschlüssige Steckverbindung der Ausgestaltung der Achtkantkontur entspricht. Die Steckverbindung mit ihrer Achtkantkontur sowie der zugeordneten Aufnahmeöffnung des Schraubimplantat-Grundkörperteils sind mit hoher Passgenauigkeit zu fertigen. Hierdurch ist eine spielfreie Verdrehsicherung des Kopfteils sowie eine spaltfreie Anlage des Kopfteils am Grundkörperteil gewährleistet.

Weiterhin ist bekannt, zur Herstellung von Grundgerüsten für Zahnersatz, insbesondere für Zahnkronen und/oder Zahnbrücken zur Befestigung auf natürlichen und/oder künstlichen Zahnstümpfen oder dergleichen, ein Kopierfräsverfahren einzusetzen, wie es in der WO-A-03/007834 beispielhaft gezeigt ist. Demzufolge wird zunächst vom Zahntechniker ein individuell an die betroffene Zahnumgebung angepasstes Wachsmodell manuell gefertigt und als ein Positivmodell in der Kopierfräsmaschine dreidimensional vermessen und digitalisiert. Auf der Grundlage des digitalisierten Positivmodells erfolgt dann die Bearbeitung eines Rohlings durch eine Werkzeugmaschine zur Herstellung des Zahnersatzes.

Das Kopierfräsverfahren ist in Bezug auf die Passgenauigkeit nur für unkritische zahntechnische Teile wie Zahnkronen anwendbar, nicht jedoch zur Herstellung des oben erwähnten Kopfteils mit hohen Anforderungen an die Passgenauigkeit des Kopfteils.

Das DE-U-203 07 643 beschreibt ein Modellierhilfsteil, das für ein Implantat bestimmt ist und aus Kunststoff oder einem kunststoffähnlichen Wachs besteht.

Gegenstand der EP-A-1 062 916 ist ein Verfahren zur Herstellung eines individuell gefertigten, implantatgestützten Zahnersatzes. Dieser besteht aus einem Implantat, einer Positionierungsvorrichtung mit Abutment sowie einer Suprakonstruktion.

Zahnrestaurationen mit zum Teil vorgefertigten Elementen wie Verankerungen sind z. B. der US-A-5,674,069, der US-B-6,231,342, der US-A-5, 989,029, der EP-B-0 891 163, der US-A-5,527,182, der US-B-6,283,753, der EP-B-0 891 163 oder der WO-A-99/62422 zu entnehmen.

Die Aufgabe der Erfindung besteht darin, ein Verfahren zur Herstellung eines Kopfteils eines Zahnimplantats oder einen Fertigungssatz für ein solches Verfahren bereitzustellen, das eine einfache und kostengünstige Fertigung des Kopfteiles ermöglicht.

Die Aufgabe wird durch ein Verfahren der eingangs genannten Art im Wesentlichen dadurch gelöst, dass in einem vor dem Kopierfrässchritt erfolgenden Vorbearbeitungsschritt an dem noch unbearbeiteten Keramik-Rohling die Steckverbindung mit der Formschlusskontur vorgefertigt wird, und an dem Positivmodell in einer, mit der Lage der rohlingsseitigen Steckverbindung korrespondierenden Position ein Abtasteinsatz vorgesehen wird, der die Dimension des Positivmodells um zumindest ein Raummaß vergrößert, das von der rohlingsseitigen Steckverbindung eingenommen wird.

Die Aufgabe wird auch gelöst durch einen Fertigungssatz für ein Verfahren zur Herstellung eines Kopfteils eines Zahnimplantats aus einem individuell gefertigten Positivmodell mittels eines Kopierfräsgeräts, insbesondere nach einem der vorhergehenden Ansprüche, welches Kopfteil über eine Steckverbindung mit einer Formschlusskontur zur Verdrehsicherung auf ein, im Kieferknochen einsetzbares Grundkörperteil steckbar ist, welcher Fertigungssatz einen vorgefrästen Keramik-Rohling aufweist, aus dem mittels des Kopierfräsgeräts auf der Grundlage des Positivmodells das Kopfteil herstellbar ist, und an welchem Keramik-Rohling die Steckverbindung unabhängig vom Kopierfrässchritt in einem Vorbearbeitungsschritt vorgefertigt ist.

Vorteilhafte Weiterbildungen der Erfindung sind den abhängigen Ansprüchen zu entnehmen.

Gemäß dem erfindungsgemäßen Verfahren wird bereits vor dem eigentlichen Kopierfräsvorgang an dem noch unbearbeiteten Keramik-Rohling die Steckverbindung hoher Passgenauigkeit vorgefertigt. Auf diese Weise kann unabhängig von dem Kopierfräsverfahren beispielsweise in einer CNC-Fräsmaschine der Keramik-Rohling mit der Steckverbindung mit Formschlusskontur mit hoher Passgenauigkeit z. B. vorgefräst werden. Parallel dazu wird an dem Positivmodell in einer, mit der Lage der rohlingsseitigen Steckverbindung korrespondierenden Position ein erfindungsgemäßer Abtasteinsatz vorgesehen. Dieser vergrößert die Dimensionen des Positivmodells um zumindest ein bestimmtes Raummaß, das von der Steckverbindung eingenommen wird. Dabei muss der Abtasteinsatz zumindest derart dimensioniert sein, dass die vorgefertigte Steckverbindung beim Fräsen nicht bearbeitet wird. Für den Kopierfräsvorgang wird daher nicht nur die Außenfläche des Positivmodells, sondern auch die Oberfläche des am Positivmodell vorgesehenen Abtasteinsatzes optisch oder mechanisch in dem Kopierfräsgerät erfasst. Der Fräser wird dadurch, berührungsfrei sowie über das Raummaß vom Keramik-Rohling beabstandet, über die bereits vorgefräste Steckverbindung geführt. Der Rest des individuell angepassten Positivmodells wird wie gewohnt weiter gefräst.

Mit dem erfindungsgemäßen Verfahren kann das Einsatzgebiet bereits vorhandener Kopierfräsgeräte erweitert werden, und zwar von der Herstellung von mit Bezug auf die Passgenauigkeit vergleichsweise weniger kritischen zahntechnischen Teilen, etwa Zahnkronen oder Zahnbrücken, auf die Herstellung individuell angepasster Kopfteile hoher Passgenauigkeit. Entsprechend können auch die bereits vorhandenen Kopierfräsgeräte mit der auf die Kopfteile ausgedehnten Produktpalette besser ausgelastet werden.

Für die Erzeugung des individuell angepassten Positivmodells kann es herstellungsbedingt erforderlich sein, dass das Positivmodell mit einer Längsbohrung ausgebildet ist. Mittels der Längsbohrung kann das Positivmodell zur individuellen Gestaltung durch den Zahntechniker an eine, die Zahnumgebung im Mund des Patienten nachbildende Modellation verschraubt und individuell dieser Zahnumgebung angepasst werden. Die Längsbohrung des Positivmodells entspricht dabei der im Kopfteil gebildeten Längsbohrung zur Fixierung an das im Kieferknochen eingesetzte Schraubimplantat-Körperteil.

Die oben erwähnte Längsbohrung des Positivmodells kann erfindungsgemäß zur Zentrierung des Positivmodells in einem Tragrahmen eines Kopierfräsgerätes in einer Referenzposition verwendet werden. Hierzu wird eine Zentrierschablone mit einem Zentrierstift vorgesehen, der durch die Längsbohrung des Positivmodells bis zu einem Höhenanschlag geführt wird. Anschließend wird die Schablone mit dem radial und axial zentrierten Positivmodell auf den Tragrahmen gesetzt und in der Referenzposition vorpositioniert.

In einem weiteren Verfahrensschritt wird das vorpositionierte Positivmodell mit Hilfe von durch den Zahntechniker eingebrachten Haltestiften in der Referenzposition fixiert, woraufhin die Zentrierschablone wieder von dem Positivmodell entfernt wird.

Nachdem somit das Positivmodell im Kopierfräsgerät in der Referenzposition fixiert ist, kann in einem folgenden Verfahrensschritt der Abtasteinsatz in Form eines Blindstöpsels in die Längsbohrung des Positivmodells eingesteckt und gehaltert werden. Anschließend kann die dreidimensionale Vermessung sowie Digitalisierung des Positivmodells für die Bearbeitung des bereits vorgefrästen Keramik-Rohlings starten.

Der Keramik-Rohling ist dabei analog zum Positivmodell ebenfalls mit seiner Längsbohrung in einer Referenzposition gehaltert, die mit der Referenzposition des Positivmodells korrespondiert.

Nach erfolgter Formgebung des Keramik-Rohlings in dem Kopierfräsgerät wird der bearbeitete Keramik-Rohling in üblicher Weise gesintert. Es wird folglich ein un- bzw. vorgesinterter Keramik-Rohling bearbeitet, wobei selbstverständlich beim dimensionellen Bearbeiten die beim Durchsintern des Rohlings auftretende Schrumpfung zu berücksichtigen ist.

Bei der Erfassung der Oberflächen-Daten des Positivmodells werden im Steuerprogramm des Kopierfräsgeräts in üblicher Weise die Dimensionen des digitalisierten Positivmodells zur Kompensation einer Sinter-Schrumpfung des Keramik-Rohlings in allen Raumrichtungen linear vergrößert.

Zur Durchführung des oben beschriebenen Verfahrens kann ein erfindungsgemäßer Fertigungssatz bereitgestellt werden, der den oben erwähnten vorgefrästen Keramik-Rohling aufweist, aus dem dann im Kopierfräsgerät auf der Grundlage des Positivmodells das Kopfteil kopiergefräst wird. Wie bereits oben erwähnt, ist in dem vorgefertigten Keramik-Rohling des Fertigungssatzes bereits die Steckverbindung mit der Längsbohrung etwa in einer CNC-Fräsmaschine mit hoher Passgenauigkeit vorgefräst bzw. gebohrt.

Zusätzlich kann der bereitgestellte Fertigungssatz den bereits erwähnten Abtasteinsatz mit umfassen, der entsprechend der Vorbeschreibung die Dimensionen des Positivmodells um zumindest ein Raummaß vergrößert, das etwa der rohlingsseitigen, vorgefrästen Steckverbindung entspricht, und zwar grundsätzlich im durchgesinterten Zustand.

Unabhängig hiervon kann der Steckverbindung in dem Rohling ein vorgefertigter Rand oder Kragen zugeordnet sein, wobei flächige Erstreckung von Steckverbindung und Rand bzw. Kragen in Längsrichtung der Steckverbindung und im durchgesinterten Zustand betrachtet kleiner als flächige Erstreckung des Abtasteinsatzes ist.

Als weiteres Zusatzteil kann der Fertigungssatz die oben erwähnte Zentrierschablone aufweisen, mit deren Hilfe das Positivmodell in dem Tragrahmen des Kopierfräsgeräts in einer vorgegebenen Referenzposition positionierbar ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: in einer Seitenschnittansicht ein fertiges Kopfteil eines Zahnimplantats zusammen mit einem zugeordneten Schraubimplantat-Körperteil in einer Explosionsdarstellung,
- Fig. 2: grob schematisch die Betriebslage eines Positivmodells sowie eines zugeordneten erfindungsgemäßen Keramik-Rohlings in einem Kopierfräs gerät,
- Fig. 3 und 4: jeweils Seitenschnittansichten des Keramik-Rohlings in unterschiedlichen Bearbeitungsstufen,
- Fig. 5: das Positivmodell mit einem Abtasteinsatz,
- Fig. 6: ein Blockschaltbild mit den Verfahrensschritten zur Herstellung des Kopfteils,
- Fig. 7: eine weitere Ausführungsform eines Keramikrohlings und
- Fig. 8: einen Abtasteinsatz in Form einer Verschlusskappe.

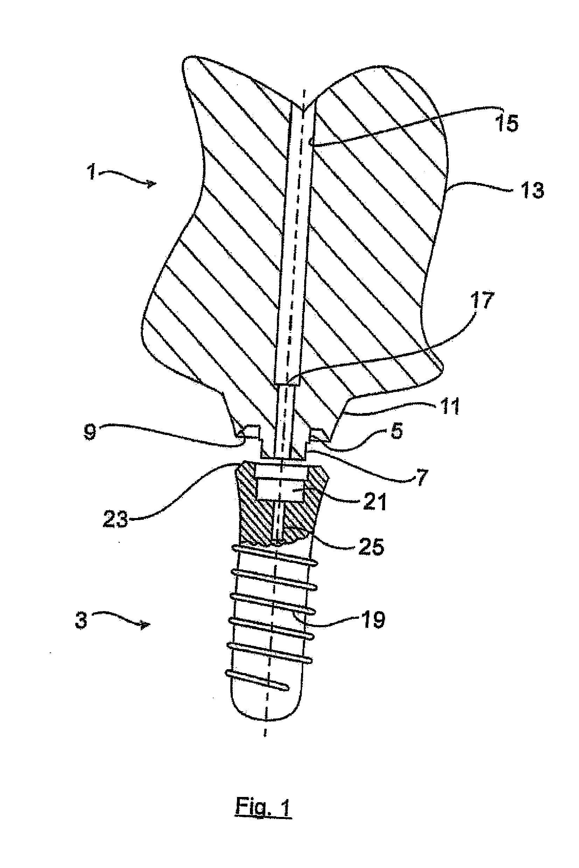

In der Fig. 1 sind als Bestandteile eines Zahnimplantats ein Kopfteil 1 aus Zirkonoxid (ZrO₂) sowie ein zugeordnetes Schraubimplantat-Körperteil 3 dargestellt. Das Kopfteil 1 weist im unteren Bereich einen zylindrischen Steckansatz 5 auf, an dem sich im weiteren axialen Verlauf eine Formschlusskontur einer Verdrehsicherung beispielhaft als eine Achtkantkontur 7 anschließt. An einer nach innen eingezogenen Negativform ist ein Anlagerand 9 ausgebildet. Der Anlagerand 9 ist dabei an einer gegenüber dem Steckansatz 5 radial größeren Konusform 11 ausgebildet, an die sich im weiteren axialen Verlauf nach oben hin eine individuelle Formgebung 13 z. B. nach Art eines Seitenzahnes anschließt.

Das Kopfteil 1 enthält eine zentrale Längsdurchgangsbohrung 15 mit einer Abstufung 17 zur Abstützung eines Schraubenkopfes einer nicht gezeigten Schraube zur Verschraubung des Kopfteiles 1 mit dem Schraubimplantat-Körperteil 3.

Wie aus der Fig. 1 weiter hervorgeht, ist das Schraubimplantat-Körperteil 3 in bekannter Weise mit einem Außengewinde 19 zum Einschrauben in eine Bohrung des Kieferknochens ausgebildet. Das Schraubimplantat-Körperteil 3 weist an seinem koronalen Ende ein Sackloch 21 auf, das als Negativform für eine formschlüssige Steckverbindung der Ausgestaltung des Steckansatzes 5 entspricht.

Am koronalen Stirnrand des Schraubimplantat-Körperteils 3 ist eine nach außen schräg abfallende Anlageschulter 23 gebildet, auf der formschlüssig und spaltfrei der Anlagerand 9 des Kopfteils 1 in Anlage bringbar ist. Zur axialen Befestigung und Sicherung wird durch seine Längsdurchgangsbohrung 15 die bereits erwähnte, nicht gezeigte Schraube geführt und in die Zylinderbohrung 25 am Boden des Sackloches 21 eingeschraubt, wobei sich der Schraubenkopf an der Abstufung 17 in der Längsdurchgangsbohrung 15 abstützt.

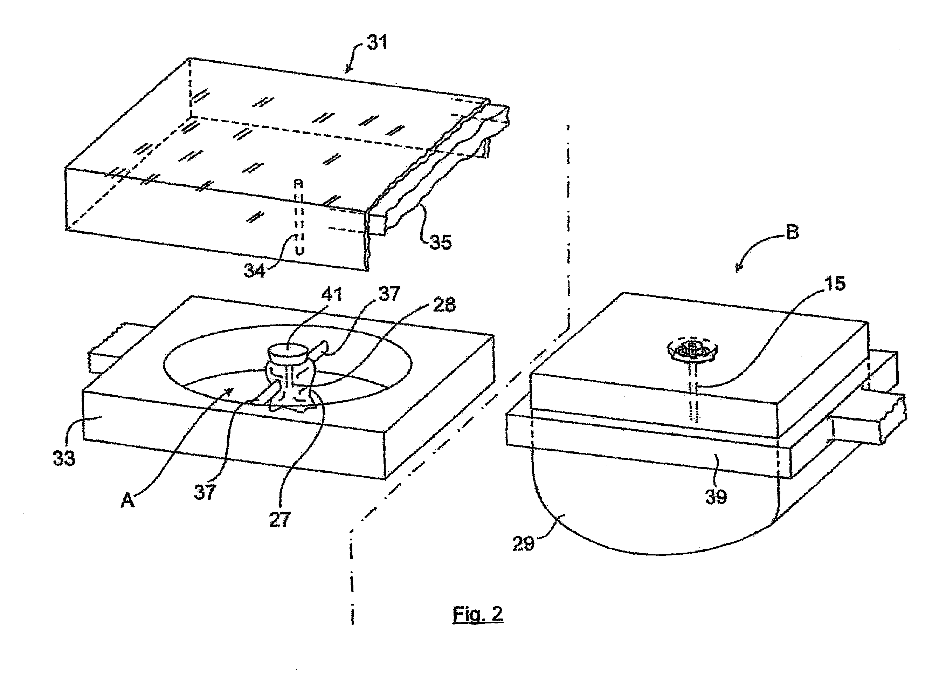

In den folgenden Figuren 2 bis 6 wird das Verfahren zur Herstellung des Kopfteiles 1 des Zahnimplantats aus einem individuell, vom Zahntechniker gefertigten Positivmodell 27, etwa einem Wachsmodell, wie es in der Fig. 5 gezeigt ist, beschrieben.

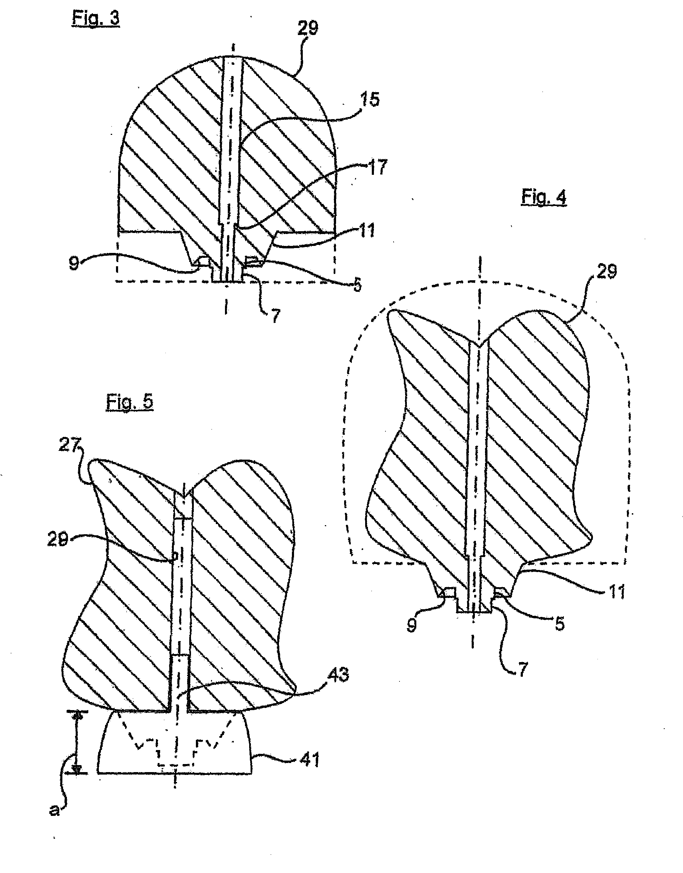

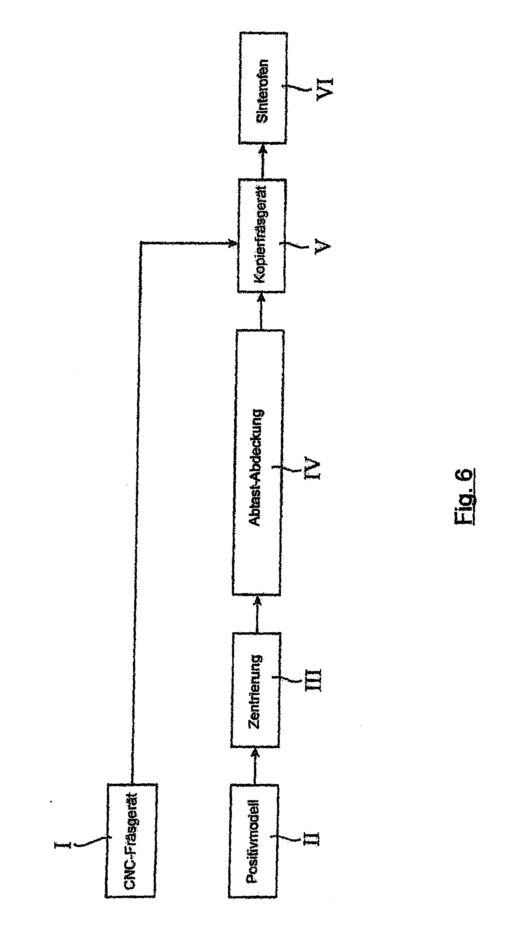

Wie aus dem Blockschaltdiagramm gemäß der Fig. 6 hervorgeht, wird in einem Vorbearbeitungsschritt I ein noch unbearbeiteter sowie ungesinterter Rohling 29 z. B. aus Zirkonoxid in einer CNC-Fräsmaschine vorbearbeitet. Der vorbearbeitete Rohling 29 ist in der Fig. 3 dargestellt. Im Rahmen dieser Vorbearbeitung wird das mit gestrichelter Linie angedeutete Material vom Rohling 29 abgefräst, so dass die dargestellte Konusform 11 mitsamt dem Steckansatz 5 am Boden des Rohlings 29 verbleibt. Mittig zur Konusform 11 wird in dem Vorbearbeitungsschritt I auch die Längsdurchgangsbohrung 15 mit der Abstufung 17 in den ungesinterten Rohling 29 gebohrt.

Unabhängig vom Vorbearbeitungsschritt I erfolgt im Modellierschritt II gemäß der Fig. 6 die manuelle Fertigung des Positivmodells 27, das entsprechend der Vorbeschreibung der Zahnumgebung vom Zahntechniker mit individueller Formgebung hergestellt wird.

Zur individualisierten Formgebung wird das Positivmodell 27 über seine Längsbohrung 28 in ein nicht dargestelltes Arbeitsmodell, das den Kiefer des Patienten sowie die betroffene Zahnumgebung nachbildet, verschraubt. Anschließend erfolgt eine manuelle Anpassung des Positivmodells 27 an die Zahnumgebung.

Darauf folgend wird in einem Zentrierschritt III das Positivmodell 27 mit seiner Längsdurchgangsbohrung 15 mit Hilfe einer Zentrierschablone 31 in einer Referenzposition A in einem Tragrahmen 33 eines nicht gezeigten Kopierfräsgerätes zentriert. In der Fig. 2 sind der Tragrahmen 33 mit dem, in der Referenzposition A befindlichen Positivmodell 27 sowie der Rohling 29 bereits in einer Betriebslage im Fräsgerät gezeigt.

Im Zentrierschritt III wird das Positivmodell 27 mit seiner Längsbohrung 29 zunächst auf einen Zentrierstift 34 der Schablone 31 gesetzt und bis zu einem Höhenanschlag 35 in eine vorbestimmte Position geschoben. Anschließend wird die Zentrierschablone 31 mitsamt dem Positivmodell 27 auf den Tragrahmen 33 gesetzt, so dass das Positivmodell 27 in der vorgegebenen Referenzposition A ausgerichtet innerhalb des Tragrahmens 33 positioniert ist. Danach wird das in seiner Referenzposition A befindliche Positivmodell 27 mittels in der Fig. 2 gezeigter Haltestifte 37 innerhalb des Tragrahmens 33 fixiert. Analog wird der ebenfalls in einem Tragrahmen 39 befestigte, bereits vorgefräste Keramik-Rohling 29 in einer, mit der Referenzposition A des Positivmodells 27 korrespondierenden Referenzposition B gehaltert, um eine formgenaue Fräsbearbeitung des Zirkon-Rohlings 29 zu erzielen.

In einem nachfolgenden Abdeckschritt IV wird dann ein Abtasteinsatz 41 in Form eines Blindstöpsels in die Längsbohrung 28 des modellierten Positivmodells 27 eingesetzt, wie es in der Fig. 5 gezeigt ist. Demzufolge weist der Blindstöpsel 41 einen mittig ausgebildeten, zylindrischen Klemmansatz 43 auf, der gemäß der Fig. 5 zur Halterung des Blindstöpsels 41 in die Längsbohrung 28 eingedrückt wird.

Wie in der Fig. 5 mit gestrichelter Linie angedeutet ist, befindet sich der Blindstöpsel 41 am Positivmodell 27 in einer Lage, die der im Vorbearbeitungsschritt I vorgefertigten Steckverbindung des Keramik-Rohlings 29 entspricht. Dabei vergrößert der Blindstöpsel 41 die Dimensionen des Positivmodells 27 um ein Raummaß a, das zumindest dem Volumen der rohlingsseitig vorgefrästen Steckverbindung nach dessen Sinterung entspricht. Gemäß der Fig. 2 ist am Rohling 29 angedeutet, dass auch die Möglichkeit besteht, dass der gestrichelt angedeutete Blindstöpsel 41 in etwa das Volumen der vorgefrästen Steckverbindung einnimmt.

Auf diese Weise wird bei einem anschließenden Kopierfrässchritt V zusätzlich zur eigentlichen Außenfläche des Positivmodells 27 auch die Außenfläche des Blindstöpsels 41 abgetastet und entsprechend digitalisiert. Der Fräser des Kopierfräsgerätes wird daher beim Kopierfräsvorgang, über das Raummaß a vom Keramik-Rohling 29 beabstandet, berührungsfrei über die bereits vorgefertigte Steckverbindung geführt. Der Rest des individuell hergestellten Positivmodells 27 wird in üblicher Weise weitergefräst. Dabei wird die beim Durchsintern auftretende Schrumpfung berücksichtigt.

Anschließend kann nach der erfolgten Formgebung der Rohling 29, wie er in der Fig. 4 gezeigt ist, wie gewohnt in einem Sinterschritt VI fertig gesintert werden.

Auf diese Weise ist es dem Zahntechniker ermöglicht, einerseits ein individuell mittels des Positivmodells 27 angepasstes Kopfteil 1 mit einer hochpräzisen Steckverbindung zu formen, wie es alleine mit dem Kopierfräsgerät nicht möglich wäre. Ebenso wenig ist mit dem erfindungsgemäßen Verfahren eine Bearbeitung des digitalisierten Positivmodells 27 erforderlich, um die Dimensionen des Positivmodells 27 um das erforderliche Raummaß a zu vergrößern. Die Erfindung ist insbesondere für Kopierfräsgeräte von Bedeutung, die keine elektronische Bearbeitung des digitalisierten Positivmodells ermöglichen. Solche Kopierfräsgeräte können mit einem aus dem vorgefrästen Keramik-Rohling 29 der Zentrierschablone 31 und dem Abtasteinsatz 41 bestehenden Fertigungssatz das erfindungsgemäße Verfahren anwenden.

Unabhängig hiervon ist anzumerken, dass unter Kopieren bzw. Kopierfrässchritt auch zu verstehen ist, dass entsprechend dem Stand der Technik das Positivmodell 27 mit dem Blindstöpsel 41 gescannt wird, um sodann auf der Basis der digitalen Daten im CAM-Verfahren den Rohling zu bearbeiten.

Bezüglich des Abtasteinsatzes ist darauf hinzuweisen, dass dieser z. B. auch eine T-Geometrie, also quasi eine Nagel- oder Pilzform aufweisen kann. Die Fläche des Kopfes muss dabei eine größere Erstreckung als der Querschnitt der Steckverbindung im durchgesinterten Zustand aufweisen. Sofern die Steckverbindung von einem vorgefertigten Rand oder Kragen 63 umgeben wird, muss der Kopf eine flächige Erstreckung aufweisen, die den Kragen bzw. Rand mit abdeckt.

Ein entsprechender eine Nagel- oder Pilzform aufweisender Abtasteinsatz 50 ist der Fig. 8 zu entnehmen. Der Abtasteinsatz 50, der auch als Verschlusskappe zu bezeichnen ist, weist einen scheibenförmigen Kopf 52 auf, dessen flächige Erstreckung größer als der Querschnitt des Steckeinsatzes im durchgesinterten Zustand ist, ggfs. mit diesen umgebenden Rand oder Kragen 63, sofern dieser vorhanden und vorgefertigt ist. Um die Verschlusskappe 50 in die Längsbohrung 28 des Positivmodells 27 einzusetzen, geht von dem Kopf 52 ein hülsenförmiger Körper 53 aus, der aus zwei durch Längsschlitze 54 getrennte Schenkel 56, 58 besteht. Hierdurch wird die Verschlusskappe 50 im Klemmsitz in der Bohrung 28 fixiert.

Die erfindungsgemäße Lehre für Kopfteile, also Abutments, auf denen z. B. eine Krone aufgebracht wird, oder Kopfteile, die integral eine Krone umfassen, muss nicht zwingend eine vorstehende Steckverlängerung aufweisen. Vielmehr sind auch verdrehsichere Verbindungen mit Implantaten möglich, bei denen das Implantat einen abstehende Zapfen aufweist, der in eine geometrisch angepasste Buchse eingreift, die in dem Kopfteil verläuft. Auch für diese Steckverbindung mit innerer Formschlusskontur ist die erfindungsgemäße Lehre anwendbar.

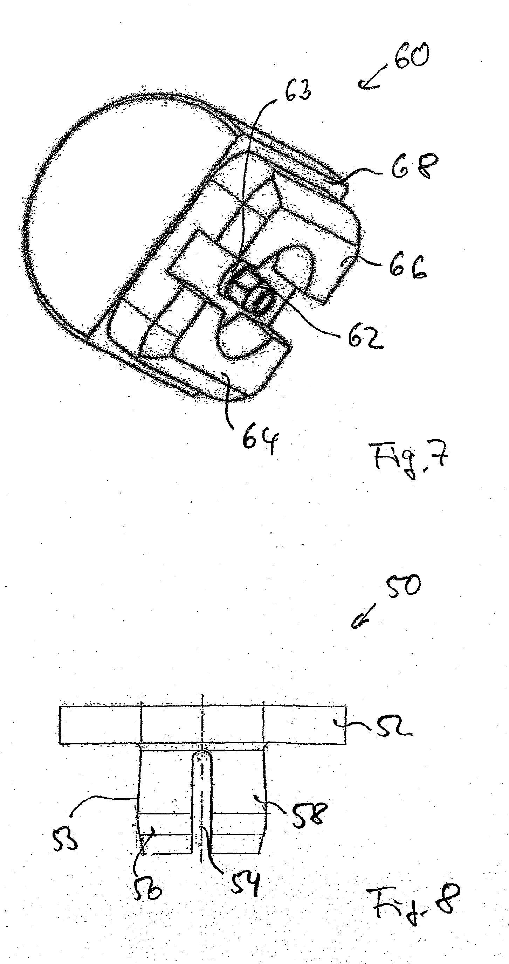

In Fig. 7 ist eine bevorzugte Ausführungsform eines vorgesinterten Keramikrohlings 60 dargestellt, der entsprechend der erfindungsgemäßen Lehre eine vorgefertigte Steckverbindung 62 mit Formschlusskontur aufweist.

Um eine Beschädigung der Steckverbindung 62 auszuschließen, ist diese von sichelförmigen Abschnitten 64, 66 beabstandet umgeben, die von der Bodenfläche 68 des Rohlings 60 abragen.

Der Abtasteinsatz, der in das zum Bearbeiten des Rohlings 60 zu Grunde liegenden Positivmodell 27, und zwar in die Bohrung 28 eingesetzt werden muss, ist sodann derart dimensioniert, dass die von dem Positivmodell 27 erhaltenen und für das Kopierfräsen bzw. CAM-Bearbeiten zum Fräsen des Rohlings 60 benötigten Daten ein Abfräsen der sichelförmigen Abschnitte 64, 66 sicherstellen, ohne dass die vorgefertigte Steckverbindung 62 bearbeitet wird.

Die Abschnitte 64, 66, die im Ausführungsbeispiel durch von der Bodenfläche 68 abragende quaderförmige Vorsprünge gebildet werden, die steckverbindungsseitig halbkreisförmige konzentrisch die Steckverbindung 62 umgebende Aussparungen aufweisen, dienen als Schutz für die Steckverbindung 62.

## Patentansprüche

1. Verfahren zur Herstellung eines Kopfteils (1) eines Zahnimplantats aus einem individuell gefertigten Positivmodell (27), welches Kopfteil (1) mit einer Steckverbindung mit einer Formschlusskontur (7) als Verdrehsicherung auf einen, im Kieferknochen einsetzbaren Grundkörperteil (3) steckbar ist, wobei ein Steckansatz (5) an einem Teil und eine zugeordnete passgenaue Aufnahmeöffnung (21) als Sackloch am anderen Teil angeordnet ist, in welchem Verfahren in einem Kopierfrässchritt (V) die Außenfläche des Positivmodells (27) dreidimensional abgetastet und erfasst wird, auf welcher Grundlage ein Keramik-Rohling (29, 60) zur Herstellung des Kopfteils (1) gefräst wird,
**dadurch gekennzeichnet,**
**dass** in einem vor dem Kopierfrässchritt (V) erfolgenden Vorbearbeitungsschritt (I) an dem noch unbearbeiteten Keramik-Rohling (29, 60) die Steckverbindung (62) mit der Formschlusskontur (7) vorgefertigt wird, und
an dem Positivmodell (27) in einer, mit der Lage der rohlingsseitigen Steckverbindung korrespondierenden Position ein Abtasteinsatz (41, 50) vorgesehen wird, der die Dimensionen des Positivmodells (27) um zumindest ein Raummaß (a) vergrößert, das von der Steckverbindung nach dem Sintern des Keramik-Rohlings (29, 60) eingenommen wird.

2. Verfahren nach Anspruch 1,
**dadurch gekennzeichnet,**
**dass** der Abtasteinsatz (41) derart dimensioniert wird, dass die Dimensionen des Positivmodells (27) um zumindest ein Raummaß (a) vergrößert wird, das von der rohlingsseitigen Steckverbindung eingenommen wird.

3. Verfahren nach Anspruch 1 oder 2,
**dadurch gekennzeichnet,**
**dass** das Positivmodell (27) mit einer Längsbohrung (28) ausgebildet wird, mittels der das Positivmodell (27) zur individuellen Fertigung an eine, die Zahnumgebung im Mund des Patienten nachbildende Modellation verschraubt und individuell der Zahnumgebung angepasst wird.

4. Verfahren nach zumindest einem der vorhergehenden Ansprüche,
**dadurch gekennzeichnet,**
**dass** zur Positionierung des Positivmodells (27) in einer Referenzposition (A) durch die Längsbohrung (28) des Positivmodells (27) ein Zentrierstift (33) einer Zentrierschablone (31) bis zu deren Höhenanschlag (35) geführt wird, und anschließend die Zentrierschablone (31) mitsamt dem Positivmodell (27) auf einen Tragrahmen (33) eines Kopierfräsgeräts aufgesetzt wird.

5. Verfahren nach zumindest einem der vorhergehenden Ansprüche,
**dadurch gekennzeichnet,**
**dass** das in seiner Referenzposition (A) befindliche Positivmodell (27) zur Festlegung im Tragrahmen (33) mittels Haltestifte (37) fixiert wird, und anschließend die Zentrierschablone (31) vom fixierten Positivmodell (27) entfernt wird.

6. Verfahren zumindest einem der vorhergehenden Ansprüche,
**dadurch gekennzeichnet,**
**dass** der Abtasteinsatz (41, 50) als ein Blindstöpsel bzw. Verschlusskappe in die Längsbohrung (28) des Positivmodells (27) eingesteckt und gehaltert wird.

7. Verfahren nach zumindest einem der vorhergehenden Ansprüche,
**dadurch gekennzeichnet,**
**dass** der noch unbearbeitete Keramik-Rohling (29, 60) unabhängig vom Kopierfrässchritt (V) vorbearbeitet wird.

8. Fertigungssatz für ein Verfahren zur Herstellung eines Kopfteils (1) eines Zahnimplantats aus einem individuell gefertigten Positivmodell (27) mittels eines Kopierfräsgeräts, insbesondere nach einem der vorhergehenden Ansprüche, welches Kopfteil (1) über eine Steckverbindung (62) mit einer Formschlusskontur (7) zur Verdrehsicherung auf ein, im Kieferknochen einsetzbares Grundkörperteil (3) steckbar ist, welcher Fertigungssatz einen vorgefrästen Keramik-Rohling (29, 60) aufweist, aus dem mittels des Kopierfräsgeräts auf der Grundlage des Positivmodells (27) das Kopfteil (1) herstellbar ist, und an welchem Keramik-Rohling (29) die Steckverbindung unabhängig vom Kopierfrässchritt (V) in einem Vorbearbeitungsschritt (I) vorgefertigt ist.

9. Fertigungssatz nach Anspruch 8,
**dadurch gekennzeichnet,**
**dass** der Fertigungssatz einen Abtasteinsatz (41, 50) aufweist, der in einer, mit der Lage der rohlingsseitigen Steckverbindung (60) korrespondierenden Position die Dimensionen des Positivmodells (27) um zumindest ein Raummaß (a) vergrößert, das von der rohlingsseitigen, vorgefrästen Steckverbindung eingenommen ist.

10. Fertigungssatz nach Anspruch 8,
**dadurch gekennzeichnet,**
**dass** der Fertigungssatz einen Abtasteinsatz (41, 60) aufweist, der in einer, mit der Lage der rohlingsseitigen Steckverbindung korrespondierenden Position die Dimensionen des Positivmodells (27) um zumindest ein Raummaß (a) vergrößert, das von der Steckverbindung des durchgesinterten Rohlings eingenommen ist.

11. Fertigungssatz nach zumindest einem der Ansprüche 8 bis 10,
**dadurch gekennzeichnet,**
**dass** der Fertigungssatz zusätzlich eine Zentrierschablone (31) zur Zentrierung des Positivmodells (27) in einem Tragrahmen (33) eines Kopierfräsgeräts aufweist.

12. Fertigungssatz nach zumindest einem der Ansprüche 8 bis 11,
**dadurch gekennzeichnet,**
**dass** die Zentrierschablone (31) einen Zentrierstift (34) aufweist, der in eine Längsbohrung (28) des Positivmodells (27) einführbar ist.

13. Fertigungssatz nach zumindest einem der einem der Ansprüche 8 bis 12,
**dadurch gekennzeichnet,**
**dass** in dem vorgefrästen Keramik-Rohling (29, 60) eine Längsbohrung (15) ausgebildet ist, die in seiner Lage und seiner Dimensionierung der Längsbohrung (28) des Positivmodells (27) entspricht.

14. Fertigungssatz nach zumindest Anspruch 8,
**dadurch gekennzeichnet,**
**dass** die vorgefertigte Steckverbindung (62) von von der Bodenfläche (68) des vorgesinterten Keramik-Rohlings (60) abragenden Vorsprüngen (64, 66) beabstandet und zumindest abschnittsweise umgeben ist.

15. Fertigungssatz nach zumindest Anspruch 8,
**dadurch gekennzeichnet,**
**dass** der Abtasteinsatz eine Verschlusskappe (61) mit einem Kopf (52) ist, dessen flächige Erstreckung größer als maximaler Querschnitt der Steckverbindung (62) ist.

16. Fertigungssatz nach zumindest Anspruch 8,
**dadurch gekennzeichnet,**
**dass** die vorgefertigte Steckverbindung (62) mit der Formschlusskontur zumindest abschnittsweise innerhalb des Keramik-Rohlings vorgesehen ist.

17. Fertigungssatz nach zumindest Anspruch 8,
**dadurch gekennzeichnet,**
**dass** der Steckverbindung in dem Rohling ein vorgefertigter Rand oder Kragen zugeordnet ist, wobei flächige Erstreckung von Steckverbindung und Rand bzw. Kragen in Längsrichtung der Steckverbindung und im durchgesinterten Zustand betrachtet kleiner als flächige Erstreckung des Abtasteinsatzes ist.
